# FASCICULE DE BREVET EUROPEEN

(11) **EP 1 477 644 B1**
(45) Date de publication et mention de la délivrance du brevet: **21.06.2006**
(21) Numéro de dépôt: 04290879.8
(22) Date de dépôt: 02.04.2004
(51) Int. Cl.: F01N 3/08, F02D 41/02, F01N 9/00, F02D 41/14, F01N 11/00, G01N 27/407, B01D 53/94, G01N 27/419

(54) **Système d'aide à la régénération d'un piège à NOx**
Unterstützungssystem zum regenerieren einer NOx Falle
Assistance system for the regeneration of a NOx trap

(30) Priorité: 12.05.2003 FR 0305695
(43) Date de publication de la demande: 17.11.2004
(73) Titulaire: Peugeot Citroen Automobiles S.A., 78140 Vélizy Villacoublay (FR)
(72) Inventeur: Coillard, Véronique, 78420 Carrières Sur Seine (FR)
(74) Mandataire: Fréchède, Michel

(56) Documents cités:
- EP-A- 0 814 248
- WO-A-00/71870
- WO-A-01/53672
- DE-A- 19 827 469

## Description

La présente invention concerne un système d'aide à la régénération d'un piège à NOx à stockage/déstockage intégré dans une ligne d'échappement d'un moteur thermique de véhicule automobile.

On sait que la réduction des émissions de NOx par catalyse DeNOx à stockage/déstockage est une solution technique envisagée pour répondre aux normes relatives à ce type de rejets, et notamment aux normes EURO IV.

A cet effet, on envisage d'utiliser un piège à NOx composé par exemple de sulfate de baryum destiné à absorber les NOx pendant le fonctionnement standard du moteur.

Quand ce piège est saturé, on propose de déclencher une phase de déstockage transitoire en basculant momentanément le moteur de ce mode de fonctionnement standard à mélange pauvre à un mode de fonctionnement de régénération à mélange riche pour produire des réducteurs, comme par exemple HC et CO, ce qui permet de réduire les NOx qui sont alors désorbés du piège, comme dans un catalyseur traditionnel.

A cet effet, un tel système d'aide à la régénération comporte des moyens de contrôle du fonctionnement de moyens d'injection de carburant dans les cylindres du moteur pour basculer le moteur du mode de fonctionnement standard à mélange pauvre au mode de fonctionnement de régénération à mélange riche.

L'un des moyens pour connaître l'état de saturation du piège à NOx, est d'utiliser un capteur de NOx dans la ligne d'échappement tel que décrit dans le document WO-A-00/71870.

Cependant, ces capteurs de NOx sont aujourd'hui peu fiables et relativement onéreux.

Le but de l'invention est donc de résoudre ces problèmes.

A cet effet, l'invention a pour objet un système d'aide à la régénération d'un piège à NOx à stockage/déstockage intégré dans une ligne d'échappement d'un moteur thermique de véhicule automobile, comportant des moyens de contrôle du fonctionnement de moyens d'injection de carburant dans les cylindres du moteur, pour basculer le moteur d'un mode de fonctionnement standard à mélange pauvre de stockage des NOx dans le piège à un mode de régénération à mélange riche de déstockage des NOx du piège et de régénération de celui-ci, caractérisé en ce qu'il comporte deux sondes λ, placées à égale distance du piège à NOx en aval de celui-ci dans la ligne d'échappement et dont l'une comporte une couche catalytique à base de rhodium, dont les sorties sont raccordées à des moyens de mesure différentielle des signaux de sortie de celles-ci, pour déterminer la quantité de NOx dans les gaz d'échappement, afin d'amener les moyens de contrôle à déclencher une phase de régénération du piège lorsque la mesure dépasse un seuil prédéterminé.

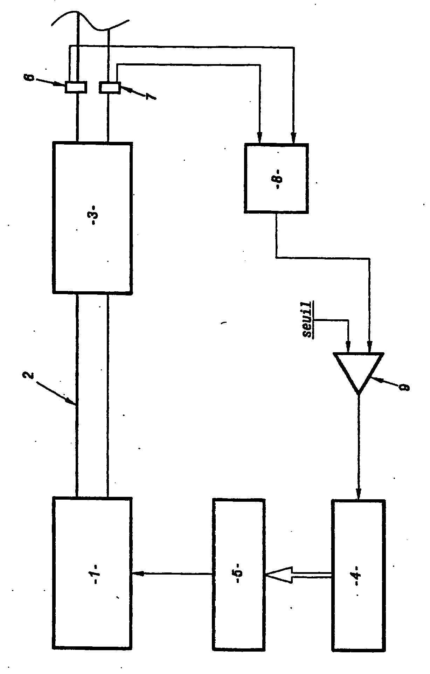

L'invention sera mieux comprise à la lecture de la description qui va suivre, donnée uniquement à titre d'exemple et faite en se référant au dessin annexé, qui représente un schéma synoptique illustrant la structure générale et le fonctionnement d'un système d'aide à la régénération selon l'invention.

On a en effet représenté sur cette figure, un système d'aide à la régénération d'un piège à NOx à stockage/déstockage intégré dans une ligne d'échappement d'un moteur thermique de véhicule automobile.

Sur cette figure, le moteur thermique est désigné par la référence générale 1, la ligne d'échappement est désignée par la référence générale 2 et le piège à NOx est désigné par la référence générale 3.

Ce système comporte des moyens 4 de contrôle du fonctionnement de moyens 5 d'injection de carburant dans les cylindres du moteur, pour basculer le moteur d'un mode de fonctionnement standard à mélange pauvre de stockage des NOx dans le piège, à un mode de fonctionnement de régénération à mélange riche de déstockage des NOx du piège et de régénération de celui-ci, de façon classique.

Selon l'invention, ce système comporte également deux sondes λ désignées par les références générales 6 et 7 sur cette figure, placées à égale distance du piège à NOx 3 en aval de celui-ci dans la ligne d'échappement et dont l'une comporte une couche catalytique à base de rhodium et réagit donc à la présence de NOx dans les gaz d'échappement.

Les sorties de ces sondes sont raccordées à des moyens de mesure différentielle des signaux de sortie de celles-ci, pour déterminer la quantité de NOx dans les gaz d'échappement.

Ces moyens de mesure différentielle sont désignés par la référence générale 8 et présentent une sortie raccordée à des moyens 9 de comparaison de cette mesure différentielle à une valeur de seuil prédéterminé pour, lorsque la mesure différentielle atteint le seuil prédéterminé, amener les moyens de contrôle 4 à déclencher un fonctionnement de régénération du piège.

Les sondes λ sont bien connues dans l'état de la technique et sont régulièrement utilisées depuis déjà plusieurs années, par exemple sur des moteurs à essence.

Elles sont en général inactives vis à vis des NOx, dans la mesure où les électrodes en platine et/ou en palladium n'ont pas d'activité vis à vis des NOx. Cependant, certains fournisseurs proposent des sondes λ équipées d'une couche catalytique à base de rhodium (platine-rodhium), qui présentent donc une activité catalytique vis à vis des NOx.

Il est alors possible en associant ces deux types de sondes λ, de créer un circuit de mesure différentielle pour obtenir la quantité de NOx en sortie du piège. Si cette quantité de NOx dépasse le seuil déterminé, cela veut dire que le piège est saturé et qu'il convient de le régénérer.

La régénération de celui-ci se fait alors de façon classique en pilotant le moteur, pour passer en mode de régénération à mélange riche.

On conçoit alors que cette structure présente un certain nombre d'avantages, notamment au niveau de son coût, de sa simplicité et de sa fiabilité.

Bien entendu, ce système s'applique à tous types de moteurs thermiques par exemple à essence ou Diesel.

## Revendications

1. Système d'aide à la régénération d'un piège à NOx (3) à stockage/déstockage intégré dans une ligne d'échappement (2) d'un moteur thermique de véhicule automobile (1), comportant des moyens (4) de contrôle du fonctionnement de moyens d'injection (5) de carburant dans les cylindres du moteur (1), pour basculer le moteur d'un mode de fonctionnement standard à mélange pauvre de stockage des NOx dans le piège à un mode de régénération à mélange riche de déstockage des NOx du piège (3) et de régénération de celui-ci, **caractérisé en ce qu'**il comporte deux sondes λ (6,7), placées à égale distance du piège à NOx (3) en aval de celui-ci dans la ligne d'échappement (2) et dont l'une comporte une couche catalytique à base de rhodium, dont les sorties sont raccordées à des moyens de mesure différentielle (8) des signaux de sortie de celles-ci, pour déterminer la quantité de NOx dans les gaz d'échappement, afin d'amener les moyens de contrôle (4) à déclencher une phase de régénération du piège lorsque la mesure dépasse un seuil prédéterminé.

## Claims

1. System for assisting in the regeneration of a storage/destorage NOx trap (3) integrated into an exhaust line (2) of a motor vehicle internal combustion engine (1), comprising control means (4) for controlling the operation of injection means (5) for injecting fuel into the cylinders of the engine (1), in order to switch the engine from a standard mode of operation with a lean mixture, in which NOx is stored in the trap, to a regeneration mode with a rich mixture, in which NOx is destored from the trap (3) and the latter is regenerated, **characterized in that** it includes two lambda probes (6, 7) placed at equal distance from the NOx trap (3) downstream of the latter in the exhaust line (2), one of which probes has a rhodium-based catalytic layer, the outputs from the probes being connected to differential measurement means (8) for measuring the output signals from the probes in order to determine the amount of NOx in the exhaust gas, so as to make the control means (4) trigger a trap regeneration phase when the measurement exceeds a predetermined threshold.

## Patentansprüche

1. System für die Unterstützung der Regenerierung einer NOₓ-Falle (3) mit Ablagerung/Abführung, die in eine Abgasleitung (2) einer Brennkraftmaschine eines Kraftfahrzeugs (1) integriert ist, wobei das System Mittel (4) umfasst, um die Funktion von Mitteln (5) für die Einspritzung von Kraftstoff in die Zylinder der Maschine (1) zu steuern, um die Maschine von einer Standardbetriebsart mit Magergemisch und NOₓ-Ablagerung in der Falle in eine Regenerationsbetriebsart mit fettern Gemisch und NOₓ-Abführung von der Falle (3) und mit Regeneration derselben umzuschalten, **dadurch gekennzeichnet, dass** es zwei λ-Sonden (6, 7) umfasst, die in gleichem Abstand von der NOₓ-Falle (3) und stromabseitig hiervon in der Abgasleitung (2) angeordnet sind und wovon eine eine katalytische Schicht auf Rhodium-Basis aufweist, deren Ausgänge mit Mitteln (8) zum differentiellen Messen ihrer Ausgangssignale verbunden sind, um die NOₓ-Menge in den Abgasen zu bestimmen, um die auszulösenden Steuermittel (4) in eine Phase der Regeneration der Falle zu versetzen, wenn die Messung einen vorgegebenen Schwellenwert übersteigt.
